# EUROPÄISCHE PATENTSCHRIFT

(11) **EP 1 354 469 B1**
(45) Veröffentlichungstag und Bekanntmachung des Hinweises auf die Patenterteilung: **01.03.2006**
(21) Anmeldenummer: 01986840.5
(22) Anmeldetag: 20.12.2001
(51) Int. Cl.: H04M 15/08, H04Q 3/00

(54) **VERFAHREN ZUR BEREITSTELLUNG VON GEBÜHRENINFORMATIONEN IN EINER TELEKOMMUNIKATIONSVERBINDUNG**
METHOD FOR THE PREPARATION OF CHARGING INFORMATION FOR A TELECOMMUNICATION CONNECTION
PROCEDE DE MISE A DISPOSITION D'INFORMATIONS DE TAXATION DANS UNE LIAISON DE TELECOMMUNICATION

(30) Priorität: 22.01.2001 DE 10102724
(43) Veröffentlichungstag der Anmeldung: 22.10.2003
(73) Patentinhaber: SIEMENS AKTIENGESELLSCHAFT, 80333 München (DE)
(72) Erfinder: SIMAL, Jan, B-9270 Laarne (BE)
(74) Vertreter: Berg, Peter
(86) Internationale Anmeldenummer: PCT/DE2001/004868
(87) Internationale Veröffentlichungsnummer: WO 2002/058377

(56) Entgegenhaltungen:
- EP-A- 0 986 241
- WO-A-00/02411
- WO-A-00/38403

## Beschreibung

Die Erfindung betrifft ein Verfahren zum Bereitstellen von Gebühreninformationen in einer Telekommunikationsverbindung zwischen einem anrufenden Teilnehmer mit einem ersten Endgerät und einem angerufenen Teilnehmer mit einem zweiten Endgerät gemäß dem Oberbegriff des Anspruchs 1.

Es ist bekannt, dass in einer Telekommunikationsverbindung, wie einem Telefongespräch, zwischen einem ersten, anrufenden Teilnehmer mit einem ersten Endgerät und einem zweiten, angerufenen Teilnehmer mit einem zweiten Endgerät eine Mehrzahl von Telekommunikationsvermittlungsstellen zwischen den beiden Endgeräten angeordnet sind, die u. a. zum Aufbau, Aufrechterhalten und Beenden der Verbindung dienen. Des Weiteren übernehmen die Vermittlungsstellen die Ermittlung der für die Telekommunikationsverbindung anfallenden Gebühren aufgrund der relevanten Tarife (Tageszeit, Dauer, Entfernung ...).

Die durch die Nutzung eines Telefonnetzes und von von verschiedenen Diensteanbietern zur Verfügung gestellten Diensten anfallenden Gebühren für ein einzelnes Telefongespräch werden in der Regel in der ersten lokalen Vermittlungsstelle, die dem anrufenden Teilnehmer zugeordnet ist, ermittelt. Die Ermittlung der Gebühren kann auch in einer weiteren Vermittlungsstelle, über die das Telefongespräch zwischen den Teilnehmern für Vermittlungszwecke läuft, durchgeführt werden. So vermittelt beispielsweise im Falle eines Auslandsgesprächs die dem anrufenden Teilnehmer zugeordnete lokale Vermittlungsstelle das Gespräch weiter an eine Auslandsvermittlungsstelle für internationale gehende Gespräche, wobei die Auslandsvermittlungsstelle das Ermitteln der für das Telefongespräch anfallenden Gebühren übernimmt. Sobald die Gebühren von der Auslandsvermittlungsstelle ermittelt wurden, werden diese bzw. die Tarife zurück an die erste dem anrufenden Teilnehmer zugeordnete lokale Vermittlungsstelle gesendet. Hierdurch wird es der lokalen Vermittlungsstelle ermöglicht, eine Gebührenabrechnung für das Telefongespräch online durchzuführen. Des Weiteren kann die lokale Vermittlungsstelle das Dienstmerkmal einer Gebührenanzeige, wie AOC (Advise of Charge), dem anrufenden Teilnehmer zur Verfügung stellen, um dem Teilnehmer zu ermöglichen, dass er die anfallenden Verbindungskosten in Form von Gebühren durch eine Anzeige auf seinem Endgerät laufend überprüfen kann.

Auch das Dienstmerkmal des Festlegens einer oberen Grenze für die durch das Telefongespräch entstehenden Kosten (SCLS = Subscriber Credit Limit Supervision) kann von der lokalen Vermittlungsstelle zur Verfügung gestellt werden. Dem Teilnehmer wird damit die Möglichkeit zu gegeben, die anfallenden Kosten durch Beenden des Telefongesprächs nicht die obere Grenze überschreiten zu lassen.

In dem deregulierten öffentlichen Telekommunikationsmarkt kann abhängig vom Gesprächstyp entweder der lokale dem anrufenden Teilnehmer zugeordnete Operator oder der Netzbetreiber (Carrier) dafür verantwortlich sein, die Gebühreninformationen online/offline bereitzustellen. Wer die Funktion des Bereitstellens der Gebühreninformation und damit des Ermittelns der Gebühren übernimmt, wird durch die Anordnung des sogenannten Gebührenbestimmungspunktes (Charging Determination Point, CDP) bestimmt.

Abhängig davon, ob der Gebührenbestimmungspunkt dem lokalen Operator oder dem Netzbetreiber, die auch zwei verschiedenen Netzen zugeordnet sein können, zugeordnet ist, ist entweder der lokale Operator oder der Netzbetreiber (Carrier) für das Ermitteln der Gebühren zuständig. So kann beispielsweise ein Netzbetreiber, um seine billigeren Gebühren dem Teilnehmer zu verdeutlichen, seine Tarifinformationen rückwärts über Netzgrenzen hinweg an den Teilnehmer senden, sofern er den Gebührenbestimmungspunkt (CDP) für dieses Telefongespräch darstellt. Diese Gebühren werden dann auf einer Anzeigevorrichtung des ersten Endgerätes des anrufenden Teilnehmers angezeigt und/oder bei dem Überschreiten einer oberen zulässigen Grenze für den Kredit (Subscriber Credit Limit supervision, SCLS) eines Teilnehmers berücksichtigt.

Aus der EP-A-0 986 241, "Verfahren zur Bereitstellung von Entgeltinformation", vom 15.3.2000 ist hierzu weiterhin ein Verfahren zum Bereitstellen von Entgelt-Informationen sowie eine Dienststeuereinheit zur Durchführung des Verfahrens bekannt. Während des Aufbaus einer von dem Teilnehmer als rufendem Teilnehmer zu einem gerufenen Teilnehmer veranlassten Verbindung wird dabei die Dienststeuereinheit getriggert. Diese wählt aus einer Vielzahl von Netzbetreibern, auf deren Tarif-Modell-Daten sie Zugriff hat, einen Netzbetreiber oder mehrerer Netzbetreiber aus, die einen Dienst für die Verbindung erbringen. Die Dienststeuereinheit berechnet mittels der Tarif-Modell-Daten des ausgewählten Netzbetreibers oder der ausgewählten Netzbetreiber und mittels Daten über den rufenden und den gerufenen Teilnehmer der Verbindung einen Tarif für die Verbindung. Die Dienststeuereinheit sendet eine Signalisierungsnachricht mit einer dem Tarif zugeordneten Tarifkennung zur Teilnehmervermittlungsstelle des rufenden Teilnehmers, die dann gemäß der von der Dienststeuereinheit empfangenen Tarifkennung Entgelt-Informationen an den Teilnehmer sendet.

Die genannten Formen der Kostenanzeige und -limitierung finden dabei ausschließlich Anwendung auf Telefongespräche, in denen der anrufende Teilnehmer die Kostenabrechnung erhält und nur solange, wie er für das Telefongespräch bezahlt. Sobald jedoch der angerufene Teilnehmer für die Kosten des Telefongesprächs aufkommen soll, wie es bei den R-Call-Gesprächen der Fall ist, nützt das Übersenden der Gebühreninformationen von der Vermittlungsstelle/dem Netzbetreiber, in der/dem der CDP angeordnet ist, zurück an die erste Vermit't-lungsstelle, die dem anrufenden Teilnehmer zugeordnet ist, wenig, da in diesem Fall eine Kostenabrechnung durch die zweite lokale Vermittlungsstelle notwendig ist. Dem angerufenen Teilnehmer kann somit eine Kostenanzeige und -limitierung nicht angeboten werden.

Dies ergibt ein offensichtliches Problem insbesondere für Betreiber, die sich auf operatorassistierte Telefongespräche spezialisiert haben. Wenn beispielsweise bei einem Münzfernsprechapparat oder einem Hoteltelefon ein operatorinitiiertes Gespräch eingeht, und ein Senden der ermittelten Gebühren für das Telefongespräch an den angerufenen Teilnehmer nicht möglich ist, ist auch eine Kostenabrechnung mit dem Münzfernsprechapparat/Hoteltelefon nicht möglich. Folglich werden die von dem Operator initiierten Gespräche für Münzfernsprechapparate oder Hotelzimmertelefone von dem Operator unterbunden und die normalen Teilnehmer werden darüber informiert, dass AOC und SCLS für diese Gespräche nicht als Dienstmerkmal angeboten werden kann.

Da bei R-Call-Gesprächen eine Übersendung der Gebühreninformation von dem Betreiber an die lokale Vermittlungsstelle, welche dem angerufenen Teilnehmer zugeordnet ist, nicht möglich ist, bestimmt diese lokale Vermittlungsstelle die Gesprächskosten auf der Basis eines Modells, welches annimmt, dass das Gespräch von dem angerufenen Teilnehmer initiiert wurde. Die entsprechenden Kosten werden dann für die Inanspruchnahme der Dienstmerkmale AOC und SCLS benutzt. Da jedoch die so ermittelten Gebühren auf der Annahme der Initiierung des Gespräches durch den angerufenen Teilnehmer basieren, ist unter Umständen die Ermittlung der wirklich anfallenden Gebühren nicht möglich. Somit findet eine Gebührenabrechnung mit der falschen Höhe von Kosten statt.

Die WO 00 38403 A, "Flexible reverse charging for wireless subscribers", vom 29.6.2000 offenbart dazu ein System für die Vergebührung eines Rufs zwischen zwei Teilnehmern. Dabei wird während des Rufaufbaus oder auch während des Rufs selbst zwischen einem rufenden und einem gerufenen Teilnehmer einer' der beiden für ein vorbestimmtes Gebührenschema ausgewählt. In Folge wird der andere Teilnehmer über den Wechsel zu diesem Schema informiert, welcher diesen Wechsel akzeptieren, ablehnen oder darüber verhandeln kann. Das System ermöglicht also den Teilnehmern für jeden Ruf die Festlegung eines Gebühren - models.

Aus der WO 00 02411 A, "Signalling in a telecommunications network", vom 13.1.2000 ist zusätzlich ein Verfahren bekannt, wie in einem Telekommunikationsnetz eine Adressierungsinformation des rufenden Teilnehmers unter Zuhilfenahme des Signalisierungssystem Nummer 7 übermittelt wird. Während des Rufaufbaus wird hierzu zwischen zwei Vermittlungsstellen ein Datenkanal für Benutzerdaten reserviert und in Folge eine initiale Adressnachricht von der ersten zur zweiten Vermittlungsstelle übertragen. Diese Nachricht enthält einen Indikator, mit welchem der zweiten Vermittlungsstelle angezeigt wird, ob die Adressierungsinformation mit Hilfe einer cinzigen oder mehreren Nachrichten gesendet wird. Darauf hin wird die erwähnte Nachricht oder werden die erwähnten Nachrichten von der ersten zur zweiten Vermittlungsstelle übertragen.

Aufgabe der vorliegenden Erfindung ist es demzufolge, ein verbessertes Verfahren zum Bereitstellen von Gebühreninformationen in einer Telekommunikationsverbindung zur Verfügung zu stellen, welches umfassendere und korrektere Gebühreninformationen liefern kann.

Diese Aufgabe wird durch ein Verfahren nach Patentanspruch 1 gelöst.

Ein wesentlicher Punkt der Erfindung liegt darin, dass die Ermittlung der für die Telekommunikationsverbindung entstehenden Gebühren in der dem ersten anrufenden Teilnehmer zugeordneten Vermittlungsstelle erfolgt, während die der Gebühr entsprechende Gebühreninformation für das Anbieten von Diensten und/oder das Erstellen einer Kostenabrechnung in der dem zweiten angerufenen Teilnehmer zugeordneten Vermittlungsstelle gehandhabt wird. Hierzu wird die Gebühreninformation in Vorwärtsrichtung, also von der Vermittlungsstelle des Anrufers zu derjenigen des Angerufenen, übermittelt. Dadurch ist unter anderem eine korrekte Gebührenabrechnung in Echtzeit für den angerufenen Teilnehmer, sofern dieser die Kosten übernehmen soll, möglich. Die Gebühren werden ja von derjenigen Vermittlungsstelle ermittelt werden, die dem angerufenen Teilnehmer zugeordnet ist.

Vorteilhaft ergibt sich aus der Trennung von Gebührenermittlung und Gebührenabrechnungserzeugung auf zwei verschiedene Vermittlungsstellen, dass auch von dem angerufenen Teilnehmer Dienstleistungsmerkmale, wie AOC oder SCLS in Anspruch genommen werden können. Die in Anspruch genommenen Dienstmerkmale basieren dann auf denjenigen Gebühreninformationen, die bei dem Telefongespräch wirklich angefallen sind.

Die von der ersten lokalen Vermittlungsstelle ermittelten Gebührendaten werden als Nachricht an die zweite Vermittlungsstelle während der bestehenden Telekommunikationsverbindung übersendet, um dort in Echtzeit eine Gebührenanzeige und -abrechnung für den angerufenen Teilnehmer zu erstellen. Die Nachricht kann in Form einer generischen APM(Application Transport Message)-ISUP(ISDN User Part)-Nachricht ausgebildet sein. Der Inhalt dieser Nachricht wird mit Anwendungstransportparametern (Application Transport Parameter, APP) bestimmt. Diese APP's bestehen unabhängig von der Anwendung grundsätzlich aus zwei Teilen:
1. einem anwendungsunabhängigen Teil, welcher binär kodiert ist und allgemeine Informationen über die Bedeutung und das Handling der Nachricht beinhaltet. Dieser Anteil ist mit verschiedenen Feldern belegt, wovon eines dafür vorgesehen ist, zu bestimmen, für welche Anwendung die Nachricht vorgesehen ist (Application Context Identifier). Der Anwendung, welche im Zusammenhang mit Gebührenabrechnungen von Telekommunikationsverbindungen steht, ist der Wert 3 zugeordnet.
2. einem anwendungsabhängigen Teil, ASE (Application Service Element) genannt, ist durch Benutzen von grundlegenden Regeln zur Datenstrukturbeschreibung (Basic Encoding Roules, BER) ASN.1 kodiert.

Der anwendungsabhängige Anteil enthält die eigentlichen Nutzinformationen (Nutzdaten) für die Anwendung der Gebührenabrechnung, also in diesem Fall für das Übersenden der ermittelten Gebühren bzw. Tarife. Dieser Anteil weist für die Gebührenabrechnungsanwendung drei verschiedene Variationen, Primitive genannt, auf, wie sie in dem europäischen Standard ES 201 296 definiert sind: CRGT (Charging Tarif), AOCRG (Add-On-Charge) und CRGA (Charging Aknowledgement). Welches dieser Primitive in der Nachricht enthalten sein soll, wird zu Beginn des ASE angezeigt. Somit ist vorteilhafterweise das Verwenden bereits bestehender Standards möglich.

Weitere Ausführungsformen der Erfindung ergeben sich aus den Unteransprüchen.

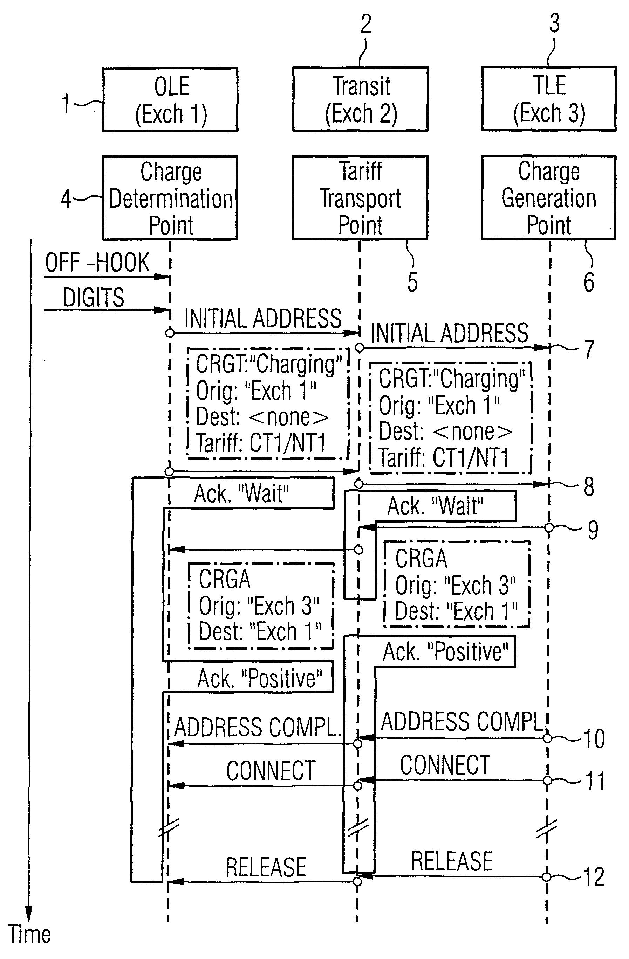

Nachfolgend wird die Erfindung anhand eines Ausführungsbeispiels beschrieben, das anhand der Figur näher erläutert wird. Diese zeigt eine schematische Darstellung des zeitlichen Ablaufs des erfindungsgemäßen Verfahrens.

Die Figur zeigt eine einem anrufenden Teilnehmer zugeordnete lokale Ursprungsvermittlungsstelle 1, eine einem angerufenen Teilnehmer zugeordnete lokale Endvermittlungsstelle 3 und eine zwischen diesen Vermittlungsstellen angeordnete Übertragungsvermittlungsstelle 2. Die drei Vermittlungsstellen können in einem gemeinsamen oder in getrennten Netzen angeordnet sein.

Ein Gebührenbestimmungspunkt (CDP) 4 ist der lokalen Ursprungsvermittlungsstelle 1 zugeordnet. In diesem Gebührenbestimmungspunkt werden die für die zwischen den Teilnehmern und damit den Vermittlungsstellen 1, 2 und 3 bestehende Telekommunikationsverbindung anfallenden Gebühren ermittelt.

In einem Tariftransportpunkt 5, der der Übertragungsvermittlungsstelle 2 zugeordnet ist, werden die ermittelten Gebühren bzw. die Tarife an die Vermittlungsstelle 3 übertragen. Dieser Vermittlungsstelle 3 ist ein Gebührenerzeugungspunkt 6 zugeordnet, welcher die Erzeugung einer Gebührenabrechnung für den angerufenen Teilnehmer zur Aufgabe hat.

Sobald der anrufende Teilnehmer den Hörer abnimmt und eine bestimmte Nummer über die Tastatur in sein Endgerät eingibt, wird in einem Schritt 7 eine Startadresse von der Vermittlungsstelle 1 an die Vermittlungsstelle 2 und weiter an die Vermittlungsstelle 3 gesendet. Eine Nachricht, welcher die Startadresse zugeordnet ist, beinhaltet Gebühreninformationen, zu welchen die in der Vermittlungsstelle 1 ermittelten Gebühren gehören. Die Vermittlungsstelle 1 ist hierbei in demjenigen Netz angeordnet, in dem der Gebührenbestimmungspunkt 4 liegt.

Die Nachricht wird als APM-Nachricht über das ISDN-CCS7-Benutzerteil (ISUP) an die Vermittlungsstelle 3 übersandt, welche zusammen mit dem angerufenen Teilnehmer in einem weiteren Netz angeordnet ist. Die auf diese Weise übermittelten Gebühreninformationen können u. a. die von der ersten Vermittlungsstelle 1 festgesetzten Tarife (CRGT, Charging Tarif) sein.

Die Vermittlungsstelle 3 interpretiert die Gebühreninformationen dementsprechend, um sie zur Aufstellung einer Gebührenabrechnung in Echtzeit oder das zur Verfügung stellen der Dienstmerkmale AOC und/oder SCLS zu verwenden. Diese Dienstmerkmale können dann bedingt dadurch, dass die Gebührenabrechnung in der dem angerufenen Teilnehmer zugeordneten Vermittlungsstelle durchgeführt wird, von dem angerufenen Teilnehmer in Anspruch genommen werden. Insbesondere können die Gebühren, die während eines Telefongespräches anfallen, angezeigt werden.

In einem Schritt 9 wird durch das Rücksenden eines Bestätigungssignals (Charging Aknowledgement, CRGA) von der Vermittlungsstelle 3 an die Vermittlungsstelle 1 die Bereitschaft angezeigt, dass die Kosten für das Telefongespräch durch den angerufenen Teilnehmer übernommen werden. In einem Schritt 11 wird dann das eigentliche Telefongespräch begonnen, sofern das Übersenden der Nachricht von der Vermittlungsstelle 1 an die Vermittlungsstelle 3 vor dem eigentlichen Beginn des Telefongesprächs stattgefunden hat. In einem Schritt 12 wird dann das Telefongespräch durch Auflegen des Hörers beendet.

Die Bestätigung und Rückmeldung des Eingangs der Gebühreninformationsnachricht und damit der Kostenübernahme durch den angerufenen Teilnehmer ist für das Fortsetzen des Telefongespräches bzw. dem Beginnen des Telefongespräches keine zwingende Voraussetzung. Vielmehr hängt die Rücksendung eines solchen Bestätigungssignales von bilateralen Vertragsbestimmungen zwischen dem Sender und dem Empfänger, also den Vermittlungsstellen mit den dazugehörigen Betreibern ab.

Sofern der angerufene Teilnehmer die Kosten für das Telefongespräch in Form eines R-Call-Gespräches übernimmt, wird die Nachricht mit der darin enthaltenen Gebühreninformationen zu einem Zeitpunkt gesendet, in dem eine Facility-Nachricht von der Ursprungsvermittlungsstelle 1 zu der Endvermittlungsstelle 3 gesendet wird. Die Gebühreninformationsnachricht wird also zu dem Zeitpunkt einer "Übertragungsanforderung" übertragen, wenn der anrufende Teilnehmer das R-Call-Gespräch beantragt hat. Wenn der angerufene Teilnehmer das R-Call-Gespräch beantragt hat, so wird die Gebühreninformationsnachricht zum Zeitpunkt der "Übertragungsannahme" übersendet.

In einer vorteilhaften Weiterbildung kann die Endvermittlungsstelle 3 im Zusammenspiel mit dem angerufenen Teilnehmer selbst bestimmen, ob die empfangenen Gebühreninformationen verwendet oder durch eigene Gebühreninformationen ersetzt werden.

Das erfindungsgemäße Verfahren, insbesondere die Übersendung der Gebühreninformationsnachricht von einer ersten an eine zweite Vermittlungsstelle, erfordert keine Änderung des ES 201 296-Standards. Eine Anwendung des erfindungsgemäßen Verfahrens unter dem ITU-T Standard Q.736 unter gleichzeitiger Änderung desjenigen Standards ist ebenso denkbar.

## Patentansprüche

1. Verfahren zur Bereitstellung von Gebühreninformationen in einer Telekommunikationsverbindung zwischen einem anrufenden Teilnehmer mit einem ersten Endgerät und einem angerufenen Teilnehmer mit einem zweiten Endgerät, wobei das erste Endgerät mit einer ersten und das zweite Endgerät mit einer zweiten lokalen Telekommunikationsvermittlungsstelle (1, 3) verbunden ist,
**dadurch gekennzeichnet, dass**
für die Telekommunikationsverbindung entstehende Gebühren in der ersten Telekommunikationsvermittlungsstelle (1) ermittelt werden und eine entsprechende Gebühreninformation als Nachricht an die zweite Telekommunikationsvermittlungsstelle (3) übersandt wird, um dort die Nutzung der Gebühreninformation in Echtzeit zu ermöglichen, während die Telekommunikationsverbindung besteht.

2. Verfahren nach Anspruch 1,
**dadurch gekennzeichnet, dass**
die Gebühreninformation zur Nutzung von Diensten und Dienstmerkmalen als APM(Application Transport Message)-ISUP(ISDN User Part)-Nachricht an die zweite Telekommunikationsvermittlungsstelle übersandt wird.

3. Verfahren nach einem der vorangegangenen Ansprüche, insbesondere nach Anspruch 2,
**dadurch gekennzeichnet, dass**
der Inhalt der APM-ISUP-Nachricht durch APP's (Application Transport Parameter) bestimmt wird.

4. Verfahren nach einem der vorangegangenen Ansprüche, insbesondere nach Anspruch 3,
**dadurch gekennzeichnet, dass**
die APP's aus einem anwendungsunabhängigen Teil, der allgemeine Informationen zur APM-ISUP-Nachricht enthält, und einem anwendungsabhängigen Teil, der Nutzdaten zu der Gebühreninformation enthält, zusammengesetzt wird.

5. Verfahren nach einem der vorangegangenen Ansprüche, insbesondere nach Anspruch,
**dadurch gekennzeichnet, dass**
der anwendungsabhängige Teil als ASE (Application Service Element) durch Benutzen von Regeln zur Datenstrukturschreibung (Basis Encoding Rules, BER) ASN.1-kodiert ist.

6. Verfahren nach einem der vorangegangenen Ansprüche,
**dadurch gekennzeichnet, dass**
die übersandte Gebühreninformation zur Erstellung einer Gebührenabrechnung in Echtzeit für den angerufenen Teilnehmer genutzt wird.

7. Verfahren nach einem der vorangegangenen Ansprüche,
**dadurch gekennzeichnet, dass**
die übersandte Gebühreninformation dazu genutzt wird, eine Schwellwertdiskriminierung bezüglich einer oberen Grenze für die von dem angerufenen Teilnehmer zu übernehmenden Gebühren vorzunehmen.

8. Verfahren nach einem der vorangegangenen Ansprüche,
**dadurch gekennzeichnet, dass**
die übersandte Gebühreninformation dazu genutzt wird, die Gebühren auf einer Anzeigevorrichtung des zweiten Endgerätes anzuzeigen, während die Telekommunikationsverbindung besteht.

9. Verfahren nach einem der vorangegangenen Ansprüche, **gekennzeichnet durch**
folgende Schritte:
- Aufbau einer Telekommunikationsverbindung zwischen den ersten und zweiten Endgeräten des anrufenden und angerufenen Teilnehmers;
- Senden (7, 8) der Nachricht mit der Gebühreninformation von der ersten Telekommunikationsvermittlungsstelle (1) zu der zweiten Telekommunikationsvermittlungsstelle (3);
- Rücksenden (9) eines Bestätigungssignales für die Übernahme der Gebühren **durch** den angerufenen Teilnehmer von der zweiten an die erste Telekommunikationsvermittlungsstelle (3, 1); und
- Beenden der Telekommunikationsverbindung zwischen anrufendem und angerufenem Teilnehmern **durch** einen der Teilnehmer oder **durch** ein auf der Nutzung der Gebühreninformation beruhendes Dienstmerkmal.

## Claims

1. Method for providing charging information within a telecommunication connection between a calling subscriber with a first terminal and a called subscriber with a second terminal, where the first terminal is connected to a first, and the second terminal to a second, local telecommunication switching office (1, 3),
**characterised in that**
charges arising for the telecommunication connection are calculated in the first telecommunication switching office (1) and a corresponding piece of charging information is sent as a message to the second telecommunication switching office (3) in order to enable the utilisation of the charging information in real time there while the telecommunication connection exists.

2. Method according to claim 1,
**characterised in that**
the charging information relating to the utilisation of services and service features is sent as an APM(Application Transport Message)-ISUP(ISDN User Part) message to the second telecommunication switching office.

3. Method according to one of the preceding claims, in particular according to claim 2,
**characterised in that**
the content of the APM-ISUP message is determined by APPs (Application Transport Parameters).

4. Method according to one of the preceding claims, in particular according to claim 3,
**characterised in that**
the APPs are composed of an application-independent part, which contains general information relating to the APM-ISUP message, and an application-dependent part, which contains payload data relating to the charging information.

5. Method according to one of the preceding claims, in particular according to claim,
**characterised in that**
the application-dependent part is ASN.1-encoded as an ASE (Application Service Element) by using rules relating for data structure description (Basic Encoding Rules, BER).

6. Method according to one of the preceding claims,
**characterised in that**
the charging information sent is utilised for the purposes of producing charge accounting in real time for the called subscriber.

7. Method according to one of the preceding claims,
**characterised in that**
the charging information sent is utilised to perform threshold value discrimination with respect to an upper limit for the charges to be assumed by the called subscriber.

8. Method according to one of the preceding claims,
**characterised in that**
the charging information sent is utilised to indicate the charges on a display device of the second terminal while the telecommunication connection exists.

9. Method according to one of the preceding claims,
**characterised by**
the following steps:
- setup of a telecommunication connection between the first and second terminals of the calling and called subscribers;
- sending (7, 8) of the message containing the charging information from the first telecommunication switching office (1) to the second telecommunication switching office (3);
- sending back (9) of a confirmation signal for the assumption of the charges by the called subscriber from the second, to the first, telecommunication switching office (3, 1); and
- termination of the telecommunication connection between calling and called subscribers by one of the subscribers or by a service feature based on the utilisation of the charging information.

## Revendications

1. Procédé de délivrance d'information de taxes dans une liaison de télécommunications entre un abonné appelant ayant un premier terminal et un abonné appelé ayant un deuxième terminal, le premier terminal étant relié à un premier central local de télécommunications et le deuxième terminal étant relié à un deuxième central local de télécommunications (1, 3),
**caractérisé en ce que** des taxes générées par la liaison de télécommunication dans le premier central de télécommunications (1) sont déterminées et une information de taxes correspondante est envoyée sous forme de message au deuxième centrale de télécommunications (3) pour y permettre l'utilisation de l'information de taxes en temps réel pendant la liaison de communication.

2. Procédé selon la revendication 1, **caractérisé en ce que** l'information de taxes est envoyée au deuxième centrale de télécommunications sous forme de message APM (Application Transport Message)-ISUP (ISDN User Part) pour l'utilisation de services et d'indicateurs de service.

3. Procédé selon l'une des revendications précédentes, en particulier selon la revendication 2, **caractérisé en ce que** le contenu du message APM-ISUP est déterminé par des APP (Application Transport Parameter).

4. Procédé selon l'une des revendications précédentes, en particulier la revendication 3, **caractérisé en ce que** les APP sont composés d'une partie indépendante de l'utilisation, qui contient des informations générales sur le message APM-ISUP, et une partie dépendante de l'utilisation qui contient les données utiles à l'information de taxes.

5. Procédé selon l'une des revendications précédentes, en particulier selon la revendication, **caractérisé en ce que** la partie dépendante de l'utilisation est codée ASN.1 sous forme de ASE (Application Service Element) en utilisant des règles d'écriture de structure de données (Basis Encoding Rules, BER).

6. Procédé selon l'une des revendications précédentes, **caractérisé en ce que** l'information de taxes envoyée est utilisée pour effectuer un calcul de taxes en temps réel destiné à l'abonné appelé.

7. Procédé selon l'une des revendications précédentes, **caractérisé en ce que** l'information de taxes émise est utilisée pour effectuer une discrimination de valeur de seuil relative à une limite supérieure des taxes qui seront prises en charge par l'abonné appelé.

8. Procédés selon l'une des revendications précédentes, **caractérisé en ce que** l'information de taxes émise est utilisée pour indiquer les taxes sur un dispositif de présentation du deuxième terminal pendant la liaison de télécommunications.

9. Procédé selon l'une des revendications précédentes, **caractérisé par** les étapes suivantes :
- établissement d'une liaison de télécommunications entre le premier terminal de l'abonné appelant et le deuxième terminal de l'abonné appelé ;
- émission (7, 8) du message comportant l'information de taxes du premier central de télécommunications (1) au deuxième central de télécommunications (3) ;
- renvoi (9) d'un signal de confirmation du transfert des taxes par l'abonné appelé du deuxième central de télécommunications (3) au premier central de télécommunications (1) ; et
- il est mis fin de la liaison de télécommunications entre l'abonné appelant et l'abonné appelé par l'un des abonnés ou par un indicateur de service reposant sur l'utilisation de l'information de taxes.
